# EUROPEAN PATENT SPECIFICATION

(11) **EP 0 913 970 B1**
(45) Date of publication and mention of the grant of the patent: **30.03.2005**
(21) Application number: 98308318.9
(22) Date of filing: 13.10.1998
(51) Int. Cl.: H04L 12/56, H04Q 7/38

(54) **Access to communications systems**
Zugriff auf Kommunikationssysteme
Accès à des systèmes de communication

(30) Priority: 31.10.1997 EP 97308747; 13.01.1998 EP 98300202
(43) Date of publication of application: 06.05.1999
(73) Proprietor: LUCENT TECHNOLOGIES INC., Murray Hill, New Jersey 07974-0636 (US)
(72) Inventor: Cao, Qiang, Watford, Hertfordshire WD2 5EY (GB); Freiberg, Lorenz Fred, Grange Park, Swindon, Wiltshire, SN5 6EB (GB); Reader, David Jonathan, Grange Park, Swindon, Wiltshire, SN5 6AW (GB)
(74) Representative: Williams, David John

(56) References cited:
- US-A- 4 477 809
- US-A- 5 572 546
- US-A- 5 598 417
- US-A- 5 610 595
- QIU X ET AL: "DYNAMIC RESERVATION MULTIPLE ACCESS (DRMA): A NEW MULTIPLE ACCESS SCHEME FOR PERSONAL COMMUNICATION SYSTEM (PCS)" WIRELESS NETWORKS, vol. 2, no. 2, 1 June 1996, pages 117-128, XP000620234
- KAROL M J; ZHAO LIU; KAY Y ENG: "Distributed Queueing Request Update Multiple Access for Wireless Packet (ATM) Networks" COMMUNICATIONS - GATEWAY TO GLOBALIZATION. PROCEEDINGS OF THE CONFERENCE ON COMMUNICATIONS. SEATTLE, JUNE 18 - 22, 1995, PROCEEDINGS OF THE CONFERENCE ON COMMUNICATIONS (ICC), vol. 2, - 18 June 1995 (1995-06-18) pages 1224-1231, NEW YORK, IEEE, US

## Description

This invention relates to communication systems and more particularly to a method and system for end-user devices to contend for access to shared resources of a communication channel.

Recent improvements in multiple access methods allow contending end-user devices access to shared networking resources in an orderly fashion. With the advent of wireless communication networks, many access methods have become unsuitable for allocating shared resources. In particular, the different types of traffic and differing Quality of Service (QoS) requirements of each user can dramatically affect the signal quality (i.e. SNR) achieved by each user. With the diversity of applications which can be made available over a communication network, the problem of assignment of shared resources based on the QoS required by each end-user and the efficient use of bandwidth in a practical communication system become increasingly important. The disadvantages of the existing systems become more acute in mobile wireless communications systems, between a mobile end-user and a base station, especially when an integrated mix of traffic such as speech, audio-visual and data communications are supported in the same channels. The QoS requirements of each end-user may vary dramatically during an established call and the type of traffic between end-users and base stations may vary dynamically.

US 5751708 by Mark J. Karol and Kai Y. Eng, and paper "Distributed-Queueing (sic) Request Update Mulitiple Access (DQRUMA) for Wireless Packet (ATM) Networks" by Mark J. Karol, Zhao Liu and Kai Y. Eng., IEEE International Conference on Communications 18-22 June 1995, ICC'95 Seattle, Gateway to Globalization, pages 1224-1231, describe an access method that allows an end-user device to piggyback, with a packet transmission, requests for access to a shared communications resource.

US 5598417 A describes a TDM (time division multiplex) wireless communication systems where the only resource is a time slot. The system confines the communication services to two groups. One group deals with voice calls, circuit data connections, and system control information which are transmitted one slot per frame (a frame consists of a number of slots). The other group deals with packet switched data, which is transmitted in the rest of the slots of the frame. The system achieves a flexible transmission rate for a certain service only by allocating different number of slots per frame.

US 5572546 describes a random access protocol, which is equivalent to slotted ALOHA. and assumes that all terminals are able to listen to each other. This system is inherently unsuitable for mobile cellular system where the mobile terminals can only listen to base stations. The application of the protocol is mainly in multihop modems and coaxial cables.

It is known from the above-mentioned paper by Mark Karol, Zhao Liu and Kai Y. Eng to provide a method for an end-user device to request resources in a communication system comprising: generating a plurality of information packets to be transmitted by said end-user device; transmitting said information packets over a communications channel within said communications system, in which each information packet contains a piggyback field which indicates a request by said end-user device for resources for transmission of another information packet.

The present invention is characterised over the disclosure of that paper in that the communication system is a code division multiple access CDMA communication system, each request is to a communication system controller and indicates resources requested by the end-user device, the resources including data rate, delay and codes.

The information allows a number of end-use devices to transmit over the same communication channel by multiplexing each user's signal in such a way that the aggregate traffic is optimal. Optimal channel throughput may be achieved, having regard to the finite resources available in the communication channel.

One advantage of the invention is that flexibility in the service provided to each end-user device can be achieved with minimum cost, and without employing any additional control channels.

The changing requirements of an end-user device can be accommodated and may include additional or reduced bandwidth. Piggybacking requests for changes in future resources allocation is particularly appropriate for use in a packet switched type communication system which may, depending on the QoS parameter of a particular end-user device, be required to perform like a circuit switch communication system for at least some of the time.

To support a certain service, a mobile terminal requests a certain information data rate, at a certain delay requirement. Hence, the piggybacking field can represent a set of values, representing a range in data rates and delay sensitivities. The base station will use the delay sensitivity value to assign its resources to support the requested data rate, whenever possible.

An air interface has a finite amount of resources with which to support a requested date rate. The air interface can divide its spectrum into frequency segments, time segments, spreading codes, or any combination thereof. More advanced systems are likely to separate the resource spatially through the use of directive antennas. Regardless of how the spectrum allocated to the system is divided, the resource is finite and can only support a finite aggregate data rate, which must be divided amongst the system's many mobile users.

In code division multiple access for example, the correlation between the spreading codes limits the number of codes that can be used. The higher the data rate supported by a code, the greater the correlation of that code with respect to the other codes in the system. Hence the base station must trade off providing a large set of codes each supporting a low data rate, with a small set of codes each supporting a high data rate. The piggybacking fields request for a certain data rate, can be accommodated by the base station simply by allowing the mobile to change to the appropriate code, providing the code resource is available.

An embodiment of the invention is described, by way of example, with reference to the following figures, in which:

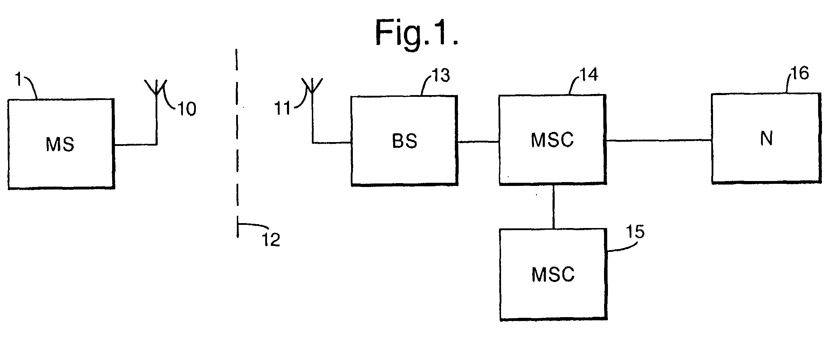

Figure 1 shows a block diagram of a mobile wireless communication system according to the invention;
Figure 2 illustrates the communication channels employed in he embodiments;
Figure 3 shows a flow diagram of a mobile wireless communication system according to the invention;
Figure 4 represents a signal sent over a communications channel of a mobile wireless communication system according to the invention; and
Figure 5 shows another representation of a signal sent over a mobile wireless communication system according to the invention.
Figure 6 shows a third representation of a signal sent over a mobile wireless communication system according to the invention.

An end-user device (Mobile Station 1) may use any one of a number of communication protocols to communicate with a network controller (e.g. base station 13, and mobile switching centre 14), via antennae 10 and 11, across an air interface 12. In the following embodiment, the communication protocol used is CDMA (code division multiple access. This enables the mobile stations to communicate using a coded spread spectrum signal with codes which are almost uncorrelated, thereby providing a multiple access communications protocol in which the collisions are not destructive of other signals broadcast concurrently. Once a communication channel has been established between mobile station 1 and its closest base station 13, the mobile switching centre 14 may establish a further connection to another mobile switching centre 15 or to the public voice or data networks 16.

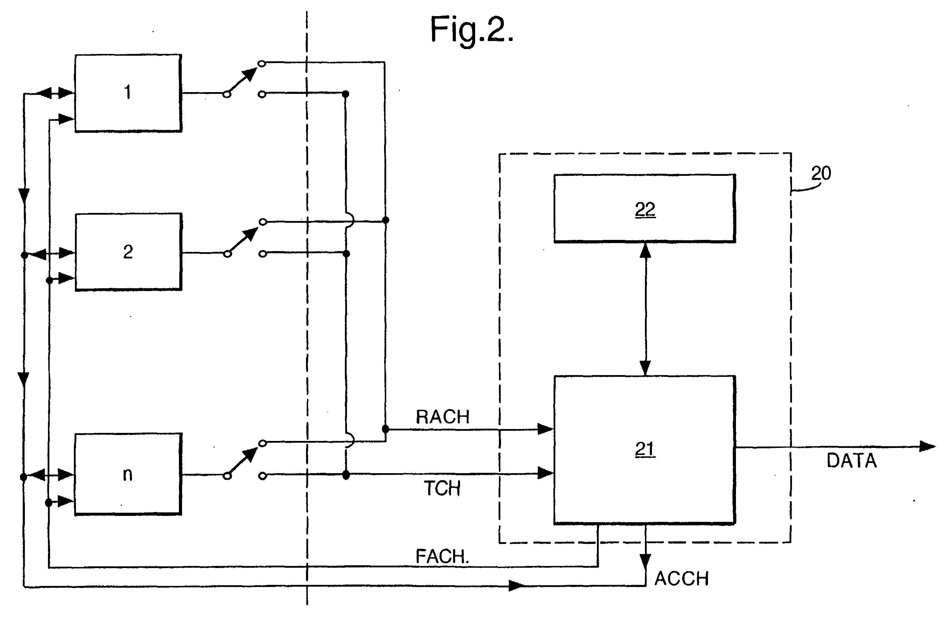

Figure 2 illustrates the logical channels established between n mobile stations (1,2,...n) and a base station 20 over the air interface 12, after the mobile stations have been connected to the mobile communications network. Each mobile station (1,2,...n) may contend for permission to send a data packet to the system controller 21 using the random access channel RACH. The base station uses a dynamic resource allocation table 22 (DRA) to establish whether sufficient resources are available in the network, and if so, grants permission on the feedback channel to transmit the data packet. The mobile station then transmits the data packet on the traffic channel TCH.

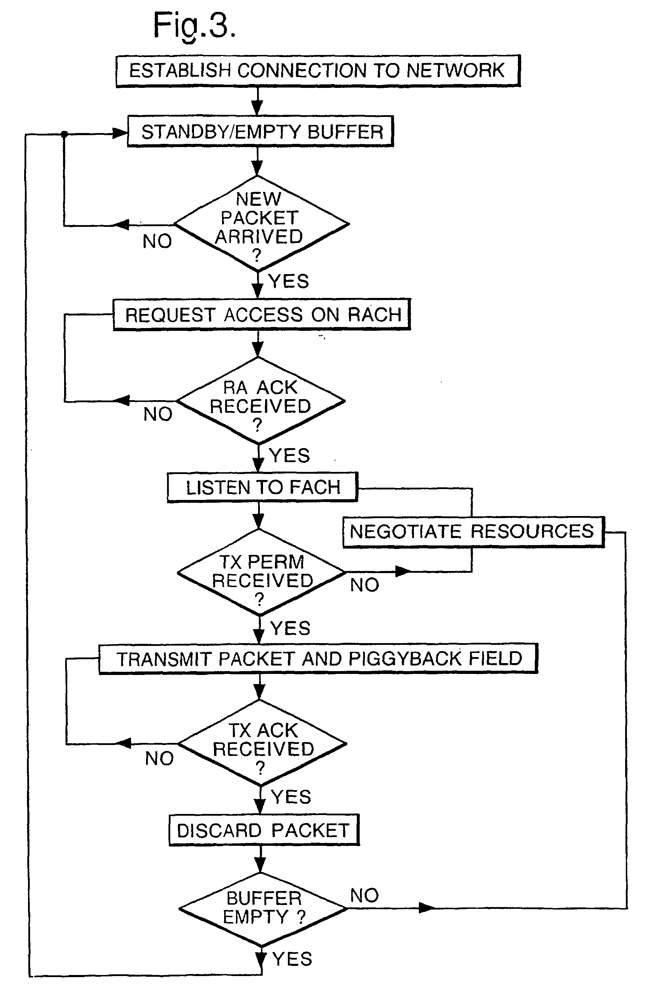

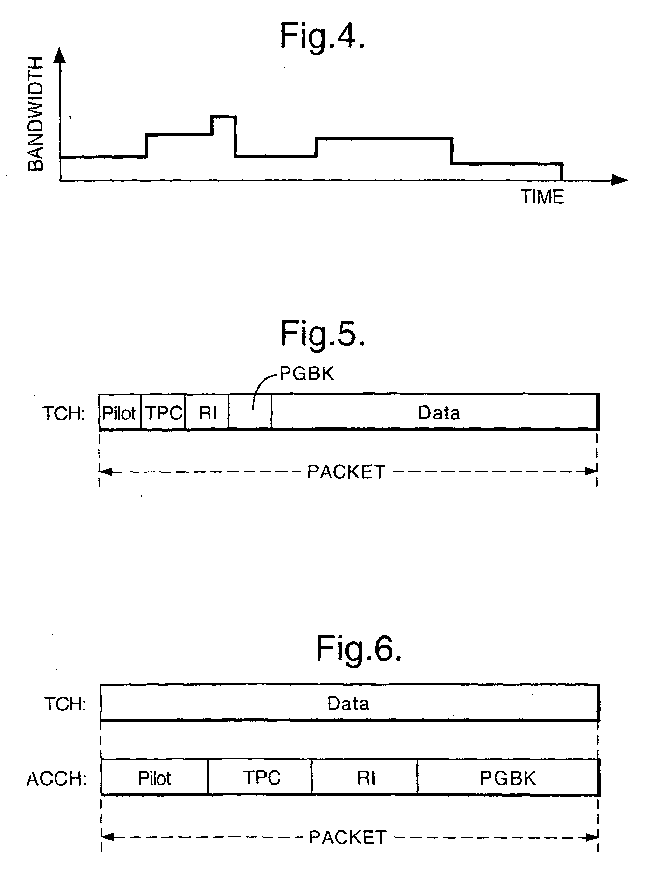

Figure 3 shows in more detail the protocol required to transmit data from the mobile station. Once a connection has been established, the mobile station remains on standby until the user wishes to make a voice call, set up an internet connection, send a fax or an e-mail, or engage in some other data exchange process. Once data has been divided into packets and has arrived in the buffer the mobile station requests a traffic channel by broadcasting a request on the RACH. Since the arrival of requests on the RACH is essentially a random process, an access failure occurs if 1) contending end-user devices happen to select the same code at the same time, giving a code cross correlation below a predetermined threshold (i.e. hard blocking) or 2) if the SNR of the physical channel deteriorates so badly that the requests cannot be decoded (i.e. soft blocking). An access failure requires the end-user device to retransmit the request using a slotted ALOHA back-off and retry protocol. The RACH requests contain the mobile stations access identification (Access ID) and an indication of the Service Requirements (e.g. particular type of traffic required, number of packets etc). Once a RACH request has been successfully decoded, the system controller acknowledges the request (RAAck) on the forward access channel (FACH). The acknowledgement contains the mobile stations Access ID and is transmitted using the same orthogonal code selected by the mobile station. The system controller access the DRA table 22 (which contains the Access ID and Transmit-Requirements for a particular mobile station) and determines the resources available in the communication channel. The system controller 21 negotiates with the mobile station for the use of the resources (e.g. bandwidth, multicodes, spreading factor, data rate, delay etc.) and the QoS threshold required. The Mobile Station then awaits permission to transmit (TxPerm) which indicates that the negotiated resources have been allocated, and that the system controller has updated the DRA table 22 accordingly. The mobile station then transmits the data packet, piggybacking into the data a piggyback field, indicating any change in resources required for transmission of the next or a subsequent packet. These resources may include changes in the bandwidth requirement, leading to a signal bandwidth profile as illustrated in Figure 4. If time division duplexing (TDD) is used to control the uplink and downlink communications between mobile stations and a base station, the piggyback field can be used to request access in a particular uplink. If a slotted ALOHA protocol is used to govern the timing of packet transmission, the piggyback field can be used to request access in a particular slot. Once a data packet has been successfully received and decoded, the system controller 21 transmits a transmit acknowledgement (TxAck) on the FACH, indicating to the mobile station that the most recently transmitted packet may be discarded from the buffer. The mobile station and the system controller are then able to negotiate any change in resources required by the mobile station and the system controller may update the DRA table as appropriate.

Figure 5 illustrates a data packet of the type that may be suitable for use in the CDMA protocol described above. The packet commences with some pilot bits (Pilot) which enable the base station to identify the start of a packet, followed by power control bits (TPC), which indicate whether the base station power should be increased or decreased. This is followed by rate information bits (RI) which tells the base station the transmission rate the user wants to use. The piggyback field (PGBK) is inserted before the data.

Figure 6 shows an alternative type of data packet suitable for use in the CDMA protocol described above. This alternative uses a second two way associated control channel (ACCH), which is established when the traffic channel is allocated. The traffic channel is used to transmit the data, the ACCH transmits the control information (namely Pilot bits, TPC bits, RI bits and the piggyback field PGBK). The data information and the control information are in-phase/quadrature multiplexed.

The foregoing is to be construed as illustrative of the invention, and similar embodiments would be apparent to one skilled in the art. For example, another communications protocol, such as TDMA or FDMA may be used to transmit data packets. In any protocol, the packet transmission can be negotiated dynamically, or if the original allocation proves insufficient, the allocation can be dynamically altered during the call.

## Claims

1. A method for an end-user device (1) to request resources in a communication system (11, 12, 13, 14, 15, 16) comprising:
generating a plurality of information packets (PACKET) to be transmitted by said end-user device (1);
transmitting said information packets, over a communications channel within said communications system,
in which each information packet contains a piggyback field (PGBK) which indicates a request by said end-user device for resources for transmission of another information packet **characterised in that**
the communication system is a code division multiple access CDMA communication system, each request is to a communication system controller (21) and indicates resources requested by the end-user device, the resources being at least data rate, delay and codes.

2. A method according to claim 1, **characterised in that** the controller (21) indicates changes in resources allocated to said end-user device (1) in accordance with the result of negotiating with the end-user device, and grants permission for the end-user device to transmit.

3. A method as claimed in claim 1 or claim 2 **characterised in that** the another information packet is the next information packet in sequence.

4. A method as claimed in any preceding claim **characterised in that** the communication system controller (21) indicates changes in resources allocated to said end-user device.

5. A communication system (1, 11, 12, 13, 14, 15, 16) comprising:
at least one end-user device (1) and
a communication channel within said communication system and over which information packets (PACKET) are transmitted, by said end-user device (I)
in which each information packet contains a piggyback field (PGBK) which indicates a request by said end-user device for resources for transmission of another information packet **characterised in that**
the communication system is a code division multiple access CDMA communication system, each request is to a communication system controller (21) and indicates resources requested by the end-user device, the resources being at least data rate, delay and codes.

6. A communication system according to claim 5, **characterised in that** the controller (21) is operative to indicate changes in resources allocated to said end-user device (1) in accordance with a result of negotiating with the end-user device, and to grant permission for the end-user device to transmit.

## Patentansprüche

1. Verfahren für eine Endbenutzervorrichtung (1) zum Anfordern von Betriebsmitteln in einem Kommunikationssystem (11, 12, 13, 14, 15, 16) mit folgenden Schritten:
Erzeugen einer Mehrzahl von durch diese Endbenutzervorrichtung (1) zu übertragenden Informationspaketen (PACKET);
Übertragen dieser Informationspakete über einen Kommunikationskanal in diesem Kommunikationssystem,
wobei jedes Informationspaket ein Huckepackfeld (PGBK) enthält, das eine Anforderung der Endbenutzervorrichtung von Betriebsmitteln zur Übertragung eines weiteren Informationspakets anzeigt, **dadurch gekennzeichnet, daß**
das Kommunikationssystem ein CDMA-Kommunikationssystem (code division multiple access) ist, jede Anforderung an eine Kommunikationssystemsteuerung (21) gerichtet ist und von der Endbenutzervorrichtung angeforderte Betriebsmittel anzeigt, wobei die Betriebsmittel mindestens Datenrate, Laufzeit und Code sind.

2. Verfahren nach Anspruch 1, **dadurch gekennzeichnet, daß** die Steuerung (21) Änderungen der der Endbenutzervorrichtung (1) zugeteilten Betriebsmittel entsprechend dem Ergebnis der Unterhandlung mit der Endbenutzervorrichtung anzeigt und Übertragungserlaubnis für die Endbenutzervorrichtung gewährt.

3. verfahren nach Anspruch 1 oder Anspruch 2, **dadurch gekennzeichnet, daß** das weitere Informationspaket das nächste Informationspaket in der Folge ist.

4. Verfahren nach einem beliebigen vorhergehenden Anspruch, **dadurch gekennzeichnet, daß** die Kommunikationssystemsteuerung (21) Änderungen der der Endbenutzervorrichtung zugeteilten Betriebsmittel anzeigt.

5. Kommunikationssystem (1, 11, 12, 13, 14, 15, 16) mit Folgendem:
mindestens einer Endbenutzervorrichtung (1) und
einem Kommunikationskanal in diesem Kommunikationssystem, über den Informationspakete (PACKET) durch diese Endbenutzervorrichtung (1) übertragen werden,
wobei jedes Informationspaket ein Huckepackfeld (PGBK) enthält, das eine Anforderung dieser Endbenutzervorrichtung von Betriebsmitteln zur Übertragung eines weiteren Informationspakets anzeigt, **dadurch gekennzeichnet, daß**
das Kommunikationssystem ein CDMA-Kommunikationssystem (code division multiple access) ist, jede Anforderung an eine Kommunikationssystemsteuerung (21) gerichtet ist und durch die Endbenutzervorrichtung angeforderte Betriebsmittel anzeigt, wobei die Betriebsmittel mindestens Datenrate, Laufzeit und Code sind.

6. Kommunikationssystem nach Anspruch 5, **dadurch gekennzeichnet, daß** durch die Steuerung (21) Änderungen der der Endbenutzervorrichtung (1) zugeteilten Betriebsmittel entsprechend einem Ergebnis der Unterhandlung mit der Endbenutzervorrichtung angezeigt werden und Übertragungserlaubnis für die Endbenutzervorrichtung gewährt wird.

## Revendications

1. Procédé pour un dispositif d'utilisateur final (1) pour demander des ressources dans un système de communication (11, 12, 13, 14, 15, 16) comprenant :
la génération d'une pluralité de paquets d'informations (PACKET) à transmettre par ledit dispositif d'utilisateur final (1) ;
la transmission desdits paquets d'informations, sur un canal de communication à l'intérieur dudit système de communication,
dans lequel chaque paquet d'informations contient un champ de superposition (PGBK) qui indique une demande par ledit dispositif d'utilisateur final pour des ressources pour la transmission d'un autre paquet d'informations **caractérisé en ce que**
le système de communication est un système de communication à accès multiple par répartition en code CDMA, chaque demande est vers un contrôleur de système de communication (21) et indique des ressources demandées par le dispositif d'utilisateur final, les ressources étant au moins du débit, du retard et des codes.

2. Procédé selon la revendication 1, **caractérisé en ce que** le contrôleur (21) indique des changements en ressources allouées audit dispositif d'utilisateur final (1) en accord avec le résultat de négociation avec le dispositif d'utilisateur final, et accorde au dispositif d'utilisateur final l'autorisation de transmettre.

3. Procédé selon la revendication 1 ou la revendication 2 **caractérisé en ce que** l'autre paquet d'informations est le paquet d'informations suivant en séquence.

4. Procédé selon l'une quelconque des revendications précédentes **caractérisé en ce que** le contrôleur de système de communication (21) indique des changements en ressources allouées audit dispositif d'utilisateur final.

5. Système de communication (1, 11, 12, 13, 14, 15, 16) comprenant :
au moins un dispositif d'utilisateur final (1) et
un canal de communication à l'intérieur dudit système de communication et sur lequel des paquets d'informations (PACKET) sont transmis, par ledit dispositif d'utilisateur final (1)
dans lequel chaque paquet d'informations contient un champ de superposition (PGBK) qui indique une demande par ledit dispositif d'utilisateur final pour des ressources pour la transmission d'un autre paquet d'informations **caractérisé en ce que**
le système de communication est un système de communication à accès multiple par répartition en code CDMA, chaque demande est vers un contrôleur de système de communication (21) et indique des ressources demandées par le dispositif d'utilisateur final, les ressources étant au moins du débit, du retard et des codes.

6. Système de communication selon la revendication 5, **caractérisé en ce que** le contrôleur (21) est opérationnel pour indiquer des changements en ressources allouées audit dispositif d'utilisateur final (1) en accord avec un résultat de négociation avec le dispositif d'utilisateur final, et pour accorder au dispositif d'utilisateur final l'autorisation de transmettre.
